# EUROPÄISCHE PATENTSCHRIFT

(11) **EP 2 059 425 B1**
(45) Veröffentlichungstag und Bekanntmachung des Hinweises auf die Patenterteilung: **30.05.2018**
(21) Anmeldenummer: 07765045.5
(22) Anmeldetag: 04.07.2007
(51) Int. Cl.: B60T 13/68, B60T 17/22

(54) **BREMSANLAGE FÜR EIN FAHRZEUG**
BRAKE SYSTEM FOR A VEHICLE
SYSTÈME DE FREINAGE POUR UN VÉHICULE

(30) Priorität: 31.08.2006 DE 102006041009
(43) Veröffentlichungstag der Anmeldung: 20.05.2009
(73) Patentinhaber: WABCO GmbH, 30453 Hannover (DE)
(72) Erfinder: BENSCH, Uwe, 30161 Hannover (DE); HELMER, Jörg, Birmingham, MI 48009 (US); KIEL, Bernd-Joachim, 31515 Wunstorf (DE); ROSENDAHL, Hartmut, 30167 Hannover (DE); STRUWE, Otmar, 30163 Hannover (DE)
(74) Vertreter: Lauerwald, Jörg
(86) Internationale Anmeldenummer: PCT/EP2007/005909
(87) Internationale Veröffentlichungsnummer: WO 2008/025399

(56) Entgegenhaltungen:
- EP-A- 0 541 957
- EP-A- 0 995 659
- DE-A1- 10 336 611
- GB-A- 2 349 675
- GB-A- 2 349 676
- US-A1- 2003 006 644

## Beschreibung

Die Erfindung betrifft eine Bremsanlage für ein Fahrzeug mit einer Feststellbremse gemäß dem Oberbegriff des Patentanspruchs 1.

Eine gattungsgemäße Bremsanlage ist aus DE 103 36 611 A1 bekannt. Diese bekannte Bremsanlage weist neben einer Betriebsbremse eine Feststellbremse auf, um das Fahrzeug mit eingelegter Bremse abstellen zu können. Eine derartige Feststellbremse wird daher auch als Parkbremse oder Handbremse bezeichnet.

Derartige Feststellbremsen weisen regelmäßig Federspeicherbremszylinder auf, bei denen eine Speicherfeder die Bremse einlegt, so dass das Fahrzeug gebremst wird bzw. nicht mehr bewegt werden kann. Diese Feststellbremse wird gelöst, indem der Federspeicherbremszylinder mit Druckluft beaufschlagt wird, so dass die Speicherfeder komprimiert und damit die Feststellbremse gelöst wird.

Derartige Federspeicherbremszylinder sind regelmäßig als kombinierte Betriebsbrems- und Federspeicherbremszylinder ausgebildet. Sie weisen daher einen Federspeicherteil und einen Betriebsbremsteil auf. Die Betriebsbremse wird dabei in herkömmlicher Weise über ein Bremspedal betätigt.

Die Druckluftversorgung des Federspeicherteils zum Lösen der Feststellbremse erfolgt mittels einer luftmengenverstärkenden Ventileinrichtung, insbesondere eines Relaisventils. Die luftmengenverstärkende Ventileinrichtung gibt an ihren Ausgang den gleichen Druck ab, der an ihrem Steuereingang anliegt, jedoch mit einer verstärkten Luftmenge, die aus einem Druckluftvorratsbehälter bezogen wird.
Der Steuereingang der luftmengenverstärkenden Ventileinrichtung wird über wenigstens ein Steuerventil mit dem Steuerdruck versorgt. Dieses Steuerventil ist als elektrisch betätigbares Steuerventil ausgebildet, wobei der Schaltzustand dieses Steuerventils von einer elektrischen Steuerungseinrichtung bestimmt wird. Die Steuerungseinrichtung steht wiederum in elektrischer Verbindung mit einer Betätigungseinrichtung zum Betätigen der Feststellbremse. Diese Betätigungseinrichtung kann vom Fahrer des Fahrzeuges betätigt werden. Mittels dieser Betätigungseinrichtung kann der Fahrer die Feststellbremse lösen oder einlegen.
Bei der gemäß DE 103 36 611 A1 beschriebenen Bremsanlage ist die Steuerungseinrichtung sowie ein Ventilmodul, in welches die Ventile der Feststellbremse baulich integriert sind, in einem Feststellbremsmodul integriert. Hierdurch ergibt sich ein kompaktes Feststellbremsmodul mit einfacher Integrierbarkeit in bestehende Druckluftbremsanlagen. Allerdings erfordert diese Integration spezielle Gehäuseteile und Module, welche einer gesonderten Entwicklung bedürfen. EP 0 541 957 A1 offenbart eine Druckluft-Bremsanlage bei der die Betriebsbremse mit einer elektro-pneumatischen Bremseinrichtung kombiniert ist mit einem elektronischen Steuergerät als elektrischer Schalt-Zentrale für die Bremsanlage. Dabei werden Einrichtungen wie Ventile zur Steuerung der Energie, d. h. Luft aus einem Vorratsbehälter ferner Bremszylinder und als Sensoren ausgebildete Zustandsfühler sowie ein Fahrtschalter elektronisch überwacht, um Kenndaten zu ermitteln und/oder die einzelnen Komponenten zu justieren. Diese Vorgänge laufen ab bei einem für die Fahrsicherheit ungefährlichen Betriebszustand des Kraftfahrzeuges. Die Erfindung hat sich daher die Aufgabe gestellt, derartige Bremsanlagen derart weiterzuentwickeln, dass der Entwicklungsaufwand reduziert werden kann.
Die Erfindung löst diese Aufgabe durch die im Patentanspruch 1 angegebenen Merkmale.
Durch die eigenständige, separate Ausbildung der Komponenten luftmengenverstärkende Ventileinrichtung, Steuerventil bzw. Steuerventile, elektrische Steuerungseinrichtung und Betätigungseinrichtung und die räumlich getrennte Anordnung dieser Komponenten kann auf herkömmliche Serienteile zurückgegriffen werden, ohne dass spezielle zusätzliche Module oder Bauteile benötigt werden. Durch den Verzicht auf eine Integration der Komponenten in ein Modul erzielt man somit eine kostengünstige aufgelöste Bauweise der Feststellbremseinrichtung. Durch die Verwendung bereits verfügbarer Bauteile vermindern sich jedoch nicht nur die Herstellkosten, sondern auch die Verfahrensdauern für die Zulassung neuer Bremssysteme.

Vorteilhafterweise ist zudem ein ebenfalls als eigenständige separate Komponente ausgebildeter Drucksensor vorgesehen, der mit der elektrischen Steuerungseinrichtung elektrisch verbunden ist und ebenfalls von den übrigen Komponenten räumlich getrennt angeordnet ist.

Bevorzugterweise wird mittels des Drucksensors ein Druck in einem Druckluftvorratsbehälter zur Versorgung des Federspeicherbremszylinders mit Druckluft gemessen und die Steuerungseinrichtung ist dabei derart ausgebildet, dass sie den gemessenen Druckwert mit einem oberen und/oder unteren Druckgrenzwert vergleicht. Bei Unterschreitung des gemessenen Druckes unter den unteren Druckgrenzwert wird das Steuerventil zur Steuerung der luftmengenverstärkenden Ventileinrichtung aktiviert, so dass mittels der luftmengenverstärkenden Ventileinrichtung der Federspeicherbremszylinder entlüftbar ist. Wenn jedoch der gemessene Druck einen oberen Druckgrenzwert nicht überschreitet, kann das Steuerventil nicht aktiviert werden, so dass mittels der luftmengenverstärkenden Ventileinrichtung der Federspeicherbremszylinder nicht belüftet werden kann.

Bei Unterschreitung eines Mindestdruckwertes in dem bzw. den Druckluftvorratsbehältern erfolgt somit vorteilhafterweise eine automatische Entlüftung des Federspeicherbremszylinders, so dass die Feststellbremse eingelegt wird. Wenn hingegen der obere Grenzwert des Druckes in dem bzw. den Druckluftvorratsbehältern noch nicht erreicht ist, kann verhindert werden, dass die Federspeicher gelöst werden. Es ist somit sichergestellt, dass in den Druckluftvorratsbehältern immer ein Mindestdruck bereitgestellt ist, bevor die Feststellbremse gelöst werden kann.

Bei einer weiteren vorteilhaften Ausführungsform weist die elektrische Betätigungseinrichtung einen oder zwei elektrische Schalter zum wahlweise Einstellen jeweils eines Lösezustandes oder Einlegezustandes der Feststellbremse auf. Ein Schalter ist ausreichend bei Fahrzeugen, die ohne einen Anhänger betrieben werden. Dann kann mittels des einen Schalters die Feststellbremse eingelegt bzw. gelöst werden. Sofern jedoch das Fahrzeug als Zugfahrzeug eines Fahrzeugzuges mit Anhänger dient, ist vorteilhafterweise ein zweiter Schalter vorgesehen, mittels dessen die Feststellbremse des Anhängers steuerbar ist.

Bei einer weiteren vorteilhaften Ausführungsform weist die elektrische Betätigungseinrichtung ferner ein weiteres Bedienelement zum Aktivieren einer Streckbremsfunktion auf. Bei Aktivierung der Streckbremse werden ()die hinteren Räder, bspw. also die Räder eines Anhängers, insbesondere eines Aufliegers eingebremst. Dies ist vorteilhaft, wenn das Fahrzeug bzw. der Fahrzeugzug auf einer glatten Fahrbahn fährt, da durch eine Streckbremse der Fahrzeugzug gestreckt bleibt. Der Fahrer des Fahrzeuges kann mittels dieses zusätzlichen Bedienelements auch testen, ob ein stehender Anhänger tatsächlich eingebremst ist, indem er dieses Bedienelement betätigt und mittels des Zugfahrzeuges eine Zugkraft auf den Anhänger ausübt. Ferner kann der Fahrer mittels der Streckbremse ein sicheres Verschließen der Verbindung zwischen Zugfahrzeug und Anhänger, insbesondere Auflieger bzw. die Sattelkupplung kontrollieren.

Bei einer weiteren bevorzugten Ausführungsform ist die Steuerungseinrichtung mit einem oder mehreren Sensoren zum Detektieren von Betriebszuständen von Fahrzeugkomponenten verbunden. Die Steuerungseinrichtung ist dabei derart ausgelegt, um in Abhängigkeit detektierter Betriebszustände die Feststellbremse einzulegen oder zu lösen. Die Federspeicherbremszylinder können somit wahlweise mittels der elektrischen Betätigungseinrichtung und damit manuell oder mittels einer automatischen Fremdsteuerung eingelegt bzw. gelöst werden. Vorteilhafterweise ist wenigstens ein Sensor zum Detektieren des Zustandes der Betriebsbremse vorgesehen und mit der Steuerungseinrichtung verbunden. Die Steuerungseinrichtung verhindert ein Lösen der Feststellbremse, wenn die Betriebsbremse nicht betätigt ist. Somit kann erzwungen werden, dass die Betriebsbremse betätigt sein muss, damit die Feststellbremse gelöst werden kann. Dies ist vorteilhaft, um ein Wegrollen des Fahrzeuges durch Lösen der Feststellbremse zu vermeiden.

Ferner ist vorteilhafterweise ein Sensor zum Detektieren der Stellung einer Fahrzeugtür vorgesehen und mit der elektrischen Steuerungseinrichtung verbunden. Die Steuerungseinrichtung legt die Feststellbremse ein bzw. verhindert ein Lösen der Feststellbremse, wenn die Fahrzeugtür geöffnet ist. Eine derartige Funktion ist bspw. bei einem Bus vorteilhaft. Durch diese Funktion wird verhindert, dass das Fahrzeug bewegt werden kann, wenn eine der Türen des Busses geöffnet ist.

Bei einer weiteren vorteilhaften Ausführungsform ist die Steuerungseinrichtung in die Steuerungseinrichtung eines Antiblockiersystems integriert. Auf diese Weise kann eine zusätzliche Steuerungseinrichtung vermieden werden, was zu Einsparungen und zu einer vereinfachten Montage der Komponenten der Feststellbremse führt. Alternativ kann die Steuerungseinrichtung jedoch auch als separate Steuerungseinrichtung für die Feststellbremse ausgebildet sein.

Bei einer weiteren vorteilhaften Ausführungsform ist vor den Steuereingang der luftmengenverstärkenden Ventileinrichtung ein Überlastschutzventil geschaltet. Dieses Überlastschutzventil weist einen ersten Eingang auf, der mit dem Steuerventil zur Steuerung der luftmengenverstärkenden Ventileinrichtung verbunden ist. Ferner weist das Überlastschutzventil einen zweiten Eingang auf, der mit dem Bremspedal der Betriebsbremse verbunden ist. Außerdem weist das Überlastschutzventil einen Ausgang auf, der mit dem Steuereingang der luftmengenverstärkenden Ventileinrichtung verbunden ist. Dank dieses Überlastschutzventils kann eine mechanische Überbeanspruchung durch Addition der Bremskräfte der Betriebsbremse und der Feststellbremse vermieden werden, da bei gleichzeitiger Betätigung der Betriebsbremse und der Feststellbremse der Druck der Betriebsbremse den Druck der Feststellbremse erhöht und damit auch die Bremswirkung verringert.

Vorteilhafterweise ist das Überlastschutzventil mit der luftmengenverstärkenden Ventileinrichtung in einer gemeinsamen Einheit integriert.

Weitere vorteilhafte Ausführungsformen ergeben sich aus den anhand der beigefügten Zeichnung näher erläuterten Ausführungsbeispielen. In der Zeichnung zeigt:
- Fig. 1: eine schematische vereinfachte Ansicht einer Druckluftbremsanlage mit einer Feststellbremse und einer Betriebsbremse mit einigen wesentlichen Komponenten und
- Fig. 2: eine Druckluftbremsanlage mit den in Fig. 1 gezeigten sowie weiteren Komponenten der Bremsanlage.

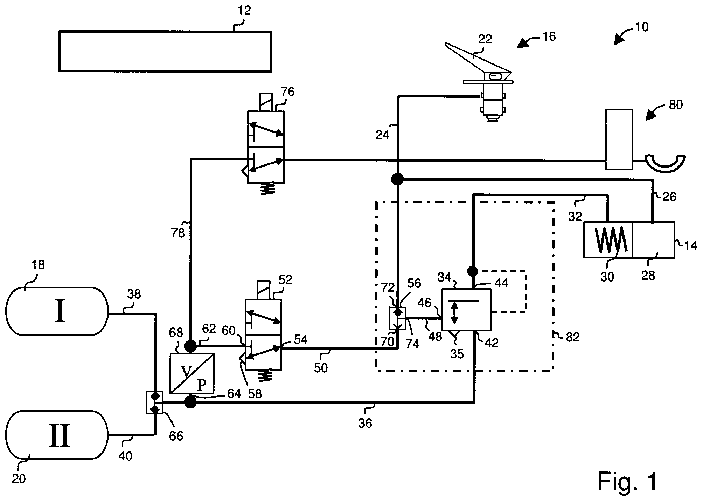

Fig. 1 zeigt schematisch einen Teil einer Druckluftbremsanlage 10 für ein Fahrzeug und zwar insbesondere eine elektropneumatische Bremssteuerungseinrichtung zur Steuerung einer Feststellbremse des Fahrzeugs. Derartige Druckluftbremsanlagen werden bspw. bei Nutzfahrzeugen, Lastkraftwagen oder Bussen verwendet. Besondere Anwendung finden derartige Bremsanlagen bei Fahrzeugzügen bestehend aus einem Zugfahrzeug und einem Anhänger.

Fig. 1 zeigt lediglich einige ausgewählte Komponenten der Bremsanlage 10. Die Bremsanlage 10 weist eine elektrische Steuerungseinrichtung 12 auf zur Steuerung einiger der Komponenten, insbesondere der Feststellbremse. Die Bremszylinder sind teilweise oder vollständig als kombinierte Betriebs- und Federspeicherbremszylinder 14 ausgebildet, wobei in Fig. 1 der Übersichtlichkeit halber nur ein derartiger Bremszylinder dargestellt ist. Soweit im Zusammenhang mit der Erfindung von Federspeicherbremszylindern besprochen wird, sind auch derartige kombinierte Betriebs- und Federspeicherbremszylinder eingeschlossen.

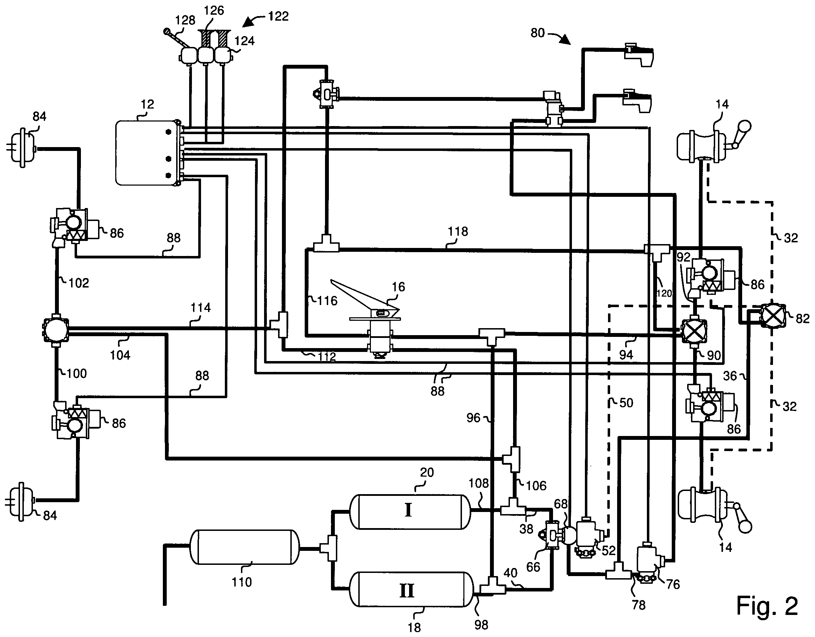

Die Bremsanlage 10 weist eine Bremsbetätigungseinrichtung 16 auf, die einen Bremswunsch des Fahrers erfasst. Die Bremsbetätigungseinrichtung 16 umfasst einen pneumatischen Teil und ggf. einen elektrischen Teil, wobei in Fig. 1 lediglich der pneumatische Teil dargestellt ist. Der pneumatische Teil wird von einem ersten Druckluftvorratsbehälter 18 (Kreis I) und einem zweiten Druckluftvorratsbehälter 20 (Kreis II) mit Druckluft über (nicht dargestellte) Druckluftleitungen versorgt. Diese Druckluftvorratsbehälter 18, 20 dienen der Druckluftversorgung der Bremszylinder der Betriebsbremse, wie nachfolgend anhand von Fig. 2 näher erläutert wird. Sie dienen aber auch, wie in Fig. 1 dargestellt, der Druckluftversorgung der Feststellbremse. Alternativ wird die Druckluft für die Feststellbremse von einem separaten Druckluftvorratsbehälter zugeführt, was jedoch in den Figuren nicht dargestellt ist.

Durch Betätigung des Bremspedals 22 erzeugt die Bremsbetätigungseinrichtung 16 - ggf. durch elektrische Ansteuerung von elektropneumatischen Einrichtungen oder direkt - eine pneumatische Stellgröße, die über eine Druckluftleitung 24, 26 an den kombinierten Betriebs- und Federspeicherbremszylinder 14 weitergeleitet wird.

Der kombinierte Betriebs- und Federspeicherbremszylinder 14 ist als kombinierter Federspeicher-/Membranzylinder ausgebildet. Er weist neben der Funktion eines Membranzylinders zusätzlich eine Federspeicherfunktion auf. Dieser Bremszylinder 14 umfasst daher einen Membranteil 28, welcher pneumatisch mit der Betriebsbremsanlage verbunden sowie mit dem eigentlichen Bremsdruck beaufschlagbar ist, und einen Federspeicherteil 30 auf, welcher pneumatisch von dem Membranteil 28 getrennt und über eine gesonderte Druckluftleitung 32 mit Druckluft beaufschlagbar ist. Der Federspeicherteil 30 bildet einen Teil der Feststellbremse. Er beinhaltet die Federspeicherfunktion, welche bei Druckbeaufschlagung des Federspeicherteils 30 eine Speicherfeder vorspannt und dabei eine Bremswirkung der Federspeicherfunktion verhindert bzw. verringert, während sich bei Entlüftung des Federspeicherteils 30 die Speicherfeder entspannt und dabei eine Bremswirkung im Rahmen der Federspeicherfunktion auf die mit dem jeweiligen Bremszylinder verbundene Bremse ausübt. Bremszylinder dieses Typs werden im vorliegenden Zusammenhang als Federspeicherbremszylinder bezeichnet.

Mittels des Federspeicherbremszylinders 14 wird eine Feststellbremsfunktion realisiert, die auch bei Fehlen von Druckluft eine Bremsung bzw. ein Feststellen des Fahrzeugs ermöglicht. Die Feststellbremsfunktion ist aktiv, wenn der jeweilige Federspeicherteil 30 eines Federspeicherbremszylinders 14 unterhalb eines Mindestdruckwertes oder vollständig entlüftet wird. Der Federspeicherteil 30 des Bremszylinders 14 ist über die Druckluftleitung 32 mit einer luftmengenverstärkenden Ventileinrichtung 34 pneumatisch verbunden, welche eine Drucksteuerung mit Hilfe elektrischer Steuerungsmittel, insbesondere der elektrischen Steuerungseinrichtung 12, erlaubt.

Ein manuell betätigbarer Feststellbremssignalgeber (in Fig. 1 nicht dargestellt) ist über (nicht dargestellte) elektrische Leitungen mit der elektrischen Steuerungseinrichtung 12 elektrisch verbunden. Der Fahrer kann mittels dieses Feststellbremssignalgebers die Feststellbremse aktivieren, indem der Federspeicherteil 30 mittels der luftmengenverstärkenden Ventileinrichtung 34 belüftet oder entlüftet wird. Die luftmengenverstärkende Ventileinrichtung 34 weist zur Entlüftung einen Entlüftungsausgang 35 auf. Durch eine Belüftung des Federspeicherteils 30 wird die Feststellbremse gelöst. Durch eine Entlüftung des Federspeicherteils 30 wird die Feststellbremse hingegen eingelegt.

Die luftmengenverstärkende Ventileinrichtung 34 ist vorzugsweise als Relaisventil ausgebildet. Die luftmengenverstärkende Ventileinheit 34 umfasst einen unmittelbar oder mittelbar über Druckluftleitungen 36, 38, 40 mit den Druckluftvorratsbehältern 18, 20 verbundenen Einlass 42. Ferner weist die luftmengenverstärkende Ventileinrichtung 34 einen über die Druckluftleitung 32 mit dem Federspeicherteil 30 des Bremszylinders 14 verbundenen Auslass 44 auf. Ferner weist die luftmengenverstärkende Ventileinrichtung 34 einen Steuereingang 46 auf, der über Druckluftleitungen 48, 50 mit einem Steuerventil 52 zur Steuerung der Feststellbremse des Zugfahrzeuges verbunden ist.

Das Steuerventil 52 ist als 3/2-Wege-Magnetventil ausgebildet. D.h. es weist drei Anschlüsse auf und kann zwei Zustände einnehmen. In dem in Fig. 1 dargestellten unbestromten Zustand ist ein Auslass 54 des Steuerventils 52 mit der Druckluftleitung 50 verbunden, welche über ein nachfolgend näher erläutertes Überlastschutzventil 56 und die Druckluftleitung 48 mit dem Steuereingang 46 der luftmengenverstärkenden Ventileinrichtung 34 verbunden ist. Im unbestromten Zustand des Steuerventils 52 ist dieser Auslass 54 mit einer Entlüftung 58 verbunden. Im unbestromten Zustand sorgt daher das Steuerventil 52 für eine Entlüftung des Steuereingangs 46 der luftmengenverstärkenden Ventileinrichtung 34 und somit auch für eine Entlüftung des Federspeicherteils 30 des Bremszylinders 14. Durch diese Entlüftung wird die Feststellbremse eingelegt.

Das Steuerventil 52 weist ferner einen Einlass 60 auf, der über Druckluftleitungen 62, 64 sowie die Druckluftleitungen 36, 38 und 40 mit den Druckluftvorratsbehältern 18 und 20 in Verbindung steht. Im bestromten Zustand des Steuerventils 52 ist dieser Einlass 60 mit dem Auslass 54 verbunden, wodurch der Vorratsdruck, und zwar aufgrund eines Doppelrückschlagventils bzw. sog. Select-High-Ventils 66 zwischen den Druckluftvorratsbehältern 18, 20 und dem Einlass 60 des Steuerventils 62 der höhere der beiden Vorratsdrücke der Druckluftvorratsbehälter 18, 20, über die Druckluftleitungen 50, 48 an den Steuereingang 46 der luftmengenverstärkenden Ventileinrichtung 34 geführt wird. Die luftmengenverstärkende Ventileinrichtung 34 steuert daraufhin an ihrem Ausgang 44 den gleichen Druck aus, der an ihrem Steuereingang 46 liegt, wobei die luftmengenverstärkende Ventileinrichtung 34 die gegenüber dem am Steuereingang 46 benötigte Luftmenge um ein mehrfaches verstärkt an ihrem Auslass 44 ausgibt. Zu diesem Zweck ist der Einlass 42 der luftmengenverstärkenden Ventileinrichtung 32 mit den Druckluftvorratsbehältern 18, 20 verbunden. Dieser ausgesteuerte Druck am Auslass 44 der luftmengenverstärkenden Ventileinrichtung 34 wird dann über die Druckluftleitung 32 an den Federspeicherteil 30 des Bremszylinders 14 zugeführt, wobei somit dieser Federspeicherteil 30 belüftet und die Feststellbremse gelöst wird.

Zwischen dem Doppelrückschlagventil 66 und dem Einlass 42 der luftmengenverstärkenden Ventileinrichtung 34 bzw. dem Einlass 60 des Steuerventils 52 ist ein Drucksensor 68 geschaltet, um den aktuell verfügbaren Vorratsdruck größenmäßig erfassen zu können. Dieser Drucksensor gibt einen entsprechend gemessenen Druckwert über eine (nicht dargestellte) elektrische Leitung an die elektrische Steuerungseinrichtung 12 aus.

Die elektrische Steuerungseinrichtung 12 ist ferner über (nicht dargestellte) elektrische Leitungen mit dem Steuerventil 52 verbunden, so dass das Steuerventil 52 seinen Zustand in Abhängigkeit entsprechender elektrischer Signale der elektrischen Steuerungseinrichtung 12 ändern kann.

Das bereits oben erwähnte Überlastschutzventil 56 weist zwei Eingänge 70, 72 und einen Ausgang 74 auf. Ein erster Eingang 70 ist mit dem Auslass 54 des Steuerventils 52 verbunden. Ein zweiter Eingang 72 ist über die Druckluftleitung 24 mit dem Bremspedal 22 bzw. dessen pneumatischem Teil verbunden. Der Ausgang 74 des Überlastschutzventils 56 ist über die Druckluftleitung 48 mit dem Steuereingang 46 der luftmengenverstärkenden Ventileinrichtung 34 verbunden. Das Überlastschutzventil 56 wählt den höheren der beiden an seinen Eingängen 70, 72 anliegenden Drücke aus und führt diesen dem Steuereingang 46 der luftmengenverstärkenden Ventileinheit 34 zu. Es wird daher auch als Select-High-Ventil bezeichnet.

Das Überlastschutzventil 56 verhindert eine Addition der von der Betriebsbremse, d.h. über den pneumatischen Teil des Bremspedals 16 an den Bremszylinder 14 zugeführten Bremskraft mit der von der Feststellbremse über die Druckluftleitungen 32, 36, 38, 40 an den Federspeicherteil 30 zugeführten Bremskraft, um auf diese Weise eine mechanische Überbeanspruchung der Bremsmechanik in der dem Bremszylinder 14 zugeordneten Radbremse zu vermeiden. Die über die Druckluftleitungen 24, 26 dem Membranteil 28 des Bremszylinders 34 zugeführte Bremskraft wird durch die dargestellte Konstruktion nicht um die von der Speicherfeder ausgeübte Bremskraft erhöht, da im Falle einer Betätigung der Betriebsbremse die von der Speicherfeder ausgeübte Bremskraft um eine der Betätigung der Betriebsbremse entsprechende Kraft reduziert wird. Somit kann eine kritische Überbeanspruchung der Radbremsen vermieden werden.

Die vorstehend erläuterten Komponenten betreffen die Bremseinrichtung des Zugfahrzeuges. Sofern an dem Zugfahrzeug ein Anhänger angekoppelt werden kann, weist die Druckluftbremsanlage 10 zusätzlich ein zweites Steuerventil 76 auf, welches über eine Druckluftleitung 78 ebenfalls mit den Druckluftvorratsbehältern 18, 20 verbunden ist. Das Steuerventil 76 ist parallel zu dem Steuerventil 52 angeordnet. Es ist im Übrigen funktionsgleich wie das Steuerventil 52 ausgebildet, so dass insofern auf die obigen Erläuterungen zum Steuerventil 52 sowie dessen Anschlüssen und Schaltzustände Bezug genommen wird. Lediglich der Ausgang dieses Steuerventils 76 ist mit einer anderen Komponente, nämlich einem Zugwagenschutzventil 80 verbunden.

In dem in Fig. 1 dargestellten Ausführungsbeispiel ist das Überlastschutzventil 56 in einer gemeinsamen Ventileinheit 82 mit der luftmengenverstärkenden Ventileinrichtung 34 integriert.

Die in der elektrischen Steuerungseinrichtung vorgesehene Steuerung erfasst mittels des Drucksensors 68 den höheren der beiden Vorratsdrücke der Druckluftvorratsbehälter 18, 20. Der somit erfasste Druck sowie der oder die Schalterzustände der (nicht dargestellten) Betätigungseinrichtung für die Feststellbremse des Zugfahrzeugs und ggf. des Anhängerfahrzeugs werden von der elektrischen Steuerungseinrichtung 12 eingelesen und ausgewertet. Je nach Ergebnis der logischen Verknüpfungen bzw. der programmierten Steuerung werden dann die Steuerventile 52, 76 für die Feststellbremse des Zugfahrzeugs bzw. des Anhängers geschaltet. Sind die Steuerventile geschaltet, d.h. insbesondere bestromt, kann die luftmengenverstärkende Ventileinrichtung 34 bzw. eine entsprechende Ventileinrichtung im Anhänger und damit der Federspeicherteil 30 bzw. ein entsprechender Federspeicherteil eines Federspeicherbremszylinders des Anhängers belüftet werden, was dazu führt, dass sich die Feststellbremse des Zugfahrzeugs bzw. des Anhängers löst. Werden hingegen die Steuerventile 52, 76 stromlos geschaltet, schaltet die luftmengenverstärkende Ventileinrichtung 34 bzw. die entsprechende Ventileinrichtung des Anhängers auf Entlüften. Die Federspeicherteile der Federspeicherbremszylinder werden dann entlüftet und somit die Feststellbremse eingelegt.

Fig. 2 zeigt das in Fig. 1 dargestellte Teilsystem der Bremsanlage 10 im größeren Zusammenhang und zwar für Fahrzeuge mit vier Rädern, welche mittels Druckluftbremszylindern 14, 84 individuell abbremsbar sind. Die Bremszylinder 14 sind für die Hinterachse und die Bremszylinder 84 für die Vorderachse vorgesehen. Die Bremszylinder 14 sind - wie im Zusammenhang mit Fig. 1 erläutert - als kombinierte Betriebsbrems-/Federspeicherbremszylinder ausgebildet, um sowohl eine Bremsung mittels der Betriebsbremse als auch ein Bremsen mittels der Feststellbremse zu ermöglichen. Den Bremszylindern 14, 84 sind jeweils elektromagnetisch betätigbare Ventile 86 vorgeschaltet. Diese Ventil 86 sind über elektrische Leitungen 88 mit der elektrischen Steuerungseinrichtung 12 verbunden. Dabei sind die Ventile 86 der Hinterachse über Druckluftleitungen 90, 92, 94, 96, 98 mit dem Druckluftvorratsbehälter 18 verbunden und bilden somit den sog. Kreis I. In entsprechender Weise sind die Ventile 86 der Vorderachse über Druckluftleitungen 100, 102, 104, 106, 108 mit dem zweiten Druckluftvorratsbehälter 20 verbunden und bilden auf diese Weise den sog. Kreis II. Beide Druckluftvorratsbehälter 18, 20 werden über eine Druckluftversorgung 110 und insbesondere über einen Kompressor mit Druckluft versorgt.

Die Bremsbetätigungseinrichtung 16 ist im dargestellten Ausführungsbeispiel mit pneumatischen Leitungen, nämlich Druckluftleitungen 112, 114 und dann weiter über die Druckluftleitungen 100, 102 mit den Ventilen 86 für die Druckluftbremszylinder 84 der Vorderachse verbunden, um eine pneumatisch betriebene Betriebsbremse bereitzustellen. In entsprechender Weise ist die Bremsbetätigungseinrichtung 16 über Druckluftleitungen 116, 118, 120 sowie die Druckluftleitungen 90, 92 mit den Ventilen 86 der kombinierten Betriebs- und Federspeicherbremszylinder 14 verbunden, um auch die Hinterachse pneumatisch einbremsen zu können.

Die in Fig. 1 gezeigten weiteren Komponenten, insbesondere die die luftmengenverstärkende Ventileinrichtung 34 sowie das Überlastschutzventil 56 umfassende Ventileinheit 82, die Steuerventile 52, 76, sowie der Drucksensor 68 sind ebenfalls in Fig. 2 dargestellt. Bzgl. dieser Komponenten wird auf die oben im Zusammenhang mit Fig. 1 Gesagte verwiesen.

Ferner zeigt Fig. 2 die bereits oben erwähnte elektrische Betätigungseinrichtung 122 zur Betätigung der Feststellbremse. Diese Betätigungseinrichtung 122 weist einen ersten Schalter 124 zur Betätigung der Feststellbremse des Zugfahrzeuges sowie eine zweiten Schalter 126 zur Betätigung der Feststellbremse des Anhängers auf. Beide Schalter weisen jeweils eine Löseposition und eine Einlegeposition und ggf. eine Neutralposition auf zum Lösen bzw. Einlegen der Feststellbremse. Ferner ist bei einer besonderen Ausführung für Fahrzeuge mit Anhängern ein zusätzliches elektrisches Bedienelement 128 vorgesehen, um die oben erläuterte Streckbremsfunktion realisieren zu können.

Diese elektrische Betätigungseinrichtung 122 ist im Fahrerhaus des Fahrzeugs angeordnet. Es kann daher auf pneumatische Schalter zur Betätigung einer Feststellbremse im Fahrerhaus verzichtet werden. Damit kann eine Verrohrung des Fahrerhauses mit Druckluftleitungen für die Feststellbremse vermieden werden und gleichwohl eine Feststellbremse betätigt werden.

Die wesentlichen Komponenten der Feststellbremse, insbesondere die luftmengenverstärkende Ventileinrichtung 34, die Steuerventile 52, 76, der Drucksensor 68, die elektrische Steuerungseinrichtung 12 und die Betätigungseinrichtung 122 sind jeweils als eigenständige, separate und räumlich voneinander getrennt angeordnete Komponenten ausgebildet. Dank dieser aufgelösten Bauweise ohne Integration dieser Komponenten in einem Modul kann erfindungsgemäß auf bereits verfügbare Serienteile zurückgegriffen werden. Dies vereinfacht die Konstruktion sowie die Zulassungsverfahren derartiger Bremsanlagen.

### Bezuaszeichenliste

- 10: Druckluftbremsanlage
- 12: elektrische Steuerungseinrichtung
- 14: Bremszylinder
- 16: Bremsbetätigungseinrichtung
- 18: Druckluftvorratsbehälter
- 20: Druckluftvorratsbehälter
- 22: Bremspedal
- 24: Druckluftleitung
- 26: Druckluftleitung
- 28: Membranteil
- 30: Federspeicherteil
- 32: Druckluftleitung
- 34: luftmengenverstärkende Ventileinrichtung
- 35: Entlüftungsausgang
- 36: Druckluftleitung
- 38: Druckluftleitung
- 40: Druckluftleitung
- 42: Einlass
- 44: Auslass
- 46: Steuereingang
- 48: Druckluftleitung
- 50: Druckluftleitung
- 52: Steuerventil
- 54: Auslass
- 56: Überlastschutzventil
- 58: Entlüftung
- 60: Einlass
- 62: Druckluftleitung
- 64: Druckluftleitung
- 66: Dopppelrückschlagventil
- 68: Drucksensor
- 70: Eingang
- 72: Eingang
- 74: Ausgang
- 76: Steuerventil
- 78: Druckluftleitung
- 80: Zugwagenschutzventil
- 82: Ventileinheit
- 84: Bremszylinder
- 86: Ventile
- 88: elektrische Leitung
- 90: Druckluftleitung
- 92: Druckluftleitung
- 94: Druckluftleitung
- 96: Druckluftleitung
- 98: Druckluftleitung
- 100: Druckluftleitung
- 102: Druckluftleitung
- 104: Druckluftleitung
- 106: Druckluftleitung
- 108: Druckluftleitung
- 110: Druckluftversorgung
- 112: Druckluftleitung
- 114: Druckluftleitung
- 116: Druckluftleitung
- 118: Druckluftleitung
- 120: Druckluftleitung
- 122: elektrische Betätigungseinrichtung
- 124: Schalter
- 126: Schalter
- 128: Bedienelement

## Patentansprüche

1. Bremsanlage für ein Fahrzeug mit einer Feststellbremse mit einer luftmengenverstärkenden Ventileinrichtung (34) zum Be- und Entlüften wenigstens eines Federspeicherbremszylinders (14) der Feststellbremse, wenigstens einem elektrisch betätigbaren Steuerventil (52) zur Steuerung der luftmengenverstärkenden Ventileinrichtung (34), einer mit dem elektrisch betätigbaren Steuerventil elektrisch gekoppelten elektrischen Steuerungseinrichtung (12) zur Steuerung des elektrisch betätigbaren Steuerventils (52) und einer mit der Steuerungseinrichtung (12) gekoppelten elektrischen Betätigungseinrichtung (122) zum Betätigen der Feststellbremse, **dadurch gekennzeichnet, dass** die luftmengenverstärkende Ventileinrichtung (34), das Steuerventil (52), die elektrische Steuerungseinrichtung (12) und die Betätigungseinrichtung (122) jeweils als eigenständige, separate und räumlich voneinander getrennt angeordnete Komponenten ausgebildet sind.

2. Bremsanlage nach Anspruch 1, **gekennzeichnet durch** einen mit der Steuerungseinrichtung (12) verbundenen Drucksensor (68), der ebenfalls als eigenständige separate Komponente ausgebildet und von den übrigen Komponenten räumlich getrennt angeordnet ist.

3. Bremsanlage nach Anspruch 2, **dadurch gekennzeichnet, dass** mittels des Drucksensors (68) ein Druck in einem Druckluftvorratsbehälter (18; 20) zur Versorgung des Federspeicherbremszylinders (14) mit Druckluft messbar ist und die Steuerungseinrichtung (12) derart ausgebildet ist, dass bei Unterschreitung des gemessenen Druckes unter einen unteren Druckgrenzwert das Steuerventil (52) aktivierbar ist, so dass mittels der luftmengenverstärkenden Ventileinrichtung (34) der Federspeicherbremszylinder (14) entlüftbar ist und/oder bei Nicht-Überschreitung des gemessenen Druckes über einen oberen Druckgrenzwert das Steuerventil (52) nicht aktivierbar ist, so dass mittels der luftmengenverstärkenden Ventileinrichtung (34) der Federspeicherbremszylinder (14) nicht entlüftbar ist.

4. Bremsanlage nach einem der vorhergehenden Ansprüche, **dadurch gekennzeichnet, dass** die elektrische Betätigungseinrichtung (122) einen oder zwei elektrische Schalter (124, 126) zum Einstellen jeweils eines Lösezustandes und eines Einlegezustandes der Feststellbremse aufweist.

5. Bremsanlage nach einem der vorhergehenden Ansprüche, **dadurch gekennzeichnet, dass** die elektrische Betätigungseinrichtung ein weiteres Bedienelement (128) zum Aktivieren einer Streckbremsfunktion aufweist.

6. Bremsanlage nach einem der vorhergehenden Ansprüche, **dadurch gekennzeichnet, dass** die Steuerungseinrichtung (12) mit einem oder mehreren Sensoren zum Detektieren von Betriebszuständen von Fahrzeugkomponenten verbunden und derart ausgelegt ist, um in Abhängigkeit detektierter Betriebszustände die Feststellbremse automatisch einzulegen oder zu lösen.

7. Bremsanlage nach Anspruch 6, **dadurch gekennzeichnet, dass** die Steuerungseinrichtung (12) mit einem Sensor zum Detektieren des Zustandes der Betriebsbremse verbunden ist, wobei die Steuerungseinrichtung (12) ein Lösen der Feststellbremse verhindert, wenn die Betriebsbremse nicht betätigt ist.

8. Bremsanlage nach Anspruch 6 oder 7, **dadurch gekennzeichnet, dass** die Steuerungseinrichtung (12) mit einem Sensor zum Detektieren der Stellung einer Fahrzeugtür verbunden ist, wobei die Steuerungseinrichtung (12) die Feststellbremse einlegt und/oder ein Lösen der Feststellbremse verhindert, wenn die Fahrzeugtür geöffnet ist.

9. Bremsanlage nach einem der vorhergehenden Ansprüche, **dadurch gekennzeichnet, dass** die Steuerungseinrichtung (12) die Steuerungseinrichtung eines Antiblockiersystems ist.

10. Bremsanlage nach einem der vorhergehenden Ansprüche, **dadurch gekennzeichnet, dass** vor dem Steuereingang (46) der luftmengenverstärkenden Ventileinrichtung (34) ein Überlastschutzventil (56) geschaltet ist, dessen erster Eingang (70) mit dem dieser luftmengenverstärkenden Ventileinrichtung (34) zugeordneten Steuerventil (52), dessen zweiter Eingang (72) mit einer Bremsbetätigungseinrichtung (16) der Betriebsbremse und dessen Ausgang (74) mit dem Steuereingang (46) der luftmengenverstärkenden Ventileinrichtung (34) pneumatisch verbunden sind.

11. Bremsanlage nach Anspruch 10, **dadurch gekennzeichnet, dass** die luftmengenverstärkende Ventileinrichtung (34) und das Überlastschutzventil (56) in einer gemeinsamen Einheit (82) integriert sind.

## Claims

1. Brake system for a vehicle with a parking brake with an air-quantity-boosting valve device (34) for aerating and ventilating at least one spring-loaded brake cylinder (14) of the parking brake, at least one electrically activated control valve (52) for controlling the air-quantity-boosting valve device (34), an electric control device (12), which is electrically coupled to the electrically activated control valve and has the purpose of controlling the electrically activated control valve (52), and an electric activation device (122) which is coupled to the control device (12) and has the purpose of activating the parking brake, **characterized in that** the air-quantity-boosting valve device (34), the control valve (52), the electric control device (12) and the activation device (122) are each embodied as independent and separate components which are arranged spatially separated from one another.

2. Brake system according to Claim 1, **characterized by** a pressure sensor (68) which is connected to the control device (12) and is also embodied as an independent separate component and is arranged spatially separated from the other components.

3. Brake system according to Claim 2, **characterized in that** a pressure in a compressed air reservoir vessel (18; 20) for supplying the spring-loaded brake cylinder (14) with compressed air can be measured by means of the pressure sensor (68), and the control device (12) is embodied in such a way that when the measured pressure drops below a lower pressure limiting value the control valve (52) can be activated so that the spring-loaded brake cylinder (14) can be ventilated by means of the air-quantity-boosting valve device (34), and/or when the measured pressure does not exceed an upper pressure limiting value the control valve (52) cannot be activated, so that the spring-loaded brake cylinder (14) cannot be ventilated by means of the air-quantity-boosting valve device (34) .

4. Brake system according to one of the preceding claims, **characterized in that** the electric activation device (122) has one or two electric switches (124, 126) for respectively setting a release state and an engaged state of the parking brake.

5. Brake system according to one of the preceding claims, **characterized in that** the electric activation device has a further operator control element (128) for activating an anti-jackknife brake function.

6. Brake system according to one of the preceding claims, **characterized in that** the control device (12) is connected to one or more sensors for detecting operating states of vehicle components and is configured to engage or release the parking brake automatically as a function of detected operating states.

7. Brake system according to Claim 6, **characterized in that** the control device (12) is connected to a sensor for detecting the state of the service brake, wherein the control device (12) prevents release of the parking brake if the service brake is not activated.

8. Brake system according to Claim 6 or 7, **characterized in that** the control device (12) is connected to a sensor for detecting the position of a vehicle door, wherein the control device (12) engages the parking brake and/or prevents release of the parking brake if the vehicle door is opened.

9. Brake system according to one of the preceding claims, **characterized in that** the control device (12) is the control device of an anti-lock brake system.

10. Brake system according to one of the preceding claims, **characterized in that** an overload protection valve (56) is connected upstream of the control inlet (46) of the air-quantity-boosting valve device (34), the first inlet (70) of which overload protection valve (56) is pneumatically connected to the control valve (52) which is assigned to this air-quantity-boosting valve device (34), and the second inlet (72) of which overload protection valve (56) is pneumatically connected to a brake activation device (16) of the service brake and the outlet (74) of which overload protection valve (56) is pneumatically connected to the control inlet (46) of the air-quantity-boosting valve device (34).

11. Brake system according to Claim 10, **characterized in that** the air-quantity-boosting valve device (34) and the overload protection valve (56) are integrated into a common unit (82).

## Revendications

1. Installation de frein pour véhicule, présentant
un frein de stationnement doté d'un dispositif de soupape (34) renforçant le débit d'air d'alimentation en air et d'évacuation d'au moins un cylindre (14) de frein à ressort d'accumulation du frein de stationnement,
au moins une soupape pilote (52) actionnée électriquement et commandant le dispositif de soupape (34) renforçant le débit d'air, un dispositif électrique de commande (12) raccordé électriquement à la soupape de commande actionnée électriquement pour commander la soupape pilote (52) actionnée électriquement et un dispositif électrique d'actionnement (122) raccordé au dispositif de commande (12) pour actionner le frein de stationnement, **caractérisée en ce que**
le dispositif de soupape (34) renforçant le débit d'air, la soupape de commande (52), le dispositif électrique de commande (12) et le dispositif d'actionnement (122) sont tous configurés comme composants autonomes, séparés et séparés spatialement les uns des autres.

2. Installation de frein selon la revendication 1, **caractérisée par** un capteur de pression (68) raccordé au dispositif de commande (12), également configuré comme composant autonome séparé et séparé spatialement des autres composants.

3. Installation de frein selon la revendication 2, **caractérisée en ce qu'**au moyen du capteur de pression (68), une pression qui règne dans un récipient (18; 20) de réserve d'air comprimé alimentant le cylindre (14) de frein à ressort d'accumulation en air comprimé peut être mesurée, le dispositif de commande (12) étant configuré de telle sorte que si la pression mesurée est inférieure à une limite inférieure de la valeur de pression, la soupape de commande (52) peut être activée de telle sorte que le cylindre (14) de frein à ressort d'accumulation puisse être vidé a moyen du dispositif de soupape (34) renforçant le débit d'air et/ou lorsque la pression mesurée n'est pas dépassée au-delà d'une valeur limite supérieure de la pression, la soupape pilote (52) ne peut être activée de telle sorte que le cylindre (14) de frein à ressort d'accumulation ne peut être vidé au moyen du dispositif de soupape (34) renforçant le débit d'air.

4. Installation de frein selon l'une des revendications précédentes, **caractérisée en ce que** le dispositif d'actionnement (122) présente un ou deux commutateurs électriques (124, 126) qui établissent l'un un état de libération et l'autre un état d'activation du frein de stationnement.

5. Installation de frein selon l'une des revendications précédentes, **caractérisée en ce que** le dispositif électrique d'actionnement présente un autre élément d'activation (128) qui active une fonction de freinage de maintien en ligne.

6. Installation de frein selon l'une des revendications précédentes, **caractérisée en ce que** le dispositif de commande (12) est relié à un ou plusieurs capteurs qui détectent les états de fonctionnement de composants du véhicule et est conçu pour engager ou libérer automatiquement le frein de stationnement en fonction des états de fonctionnement qui ont été détectés.

7. Installation de frein selon la revendication 6, **caractérisée en ce que** le dispositif de commande (12) est relié à un capteur qui détecte l'état des freins de service, le dispositif de commande (12) empêchant une libération du frein de stationnement si le frein de service n'a pas été actionné.

8. Installation de frein selon les revendications 6 ou 7, **caractérisée en ce que** le dispositif de commande (12) est relié à un capteur qui détecte la position d'une porte du véhicule, le dispositif de commande (12) engageant le frein de stationnement et/ou empêchant une libération du frein de stationnement lorsque la porte du véhicule est ouverte.

9. Installation de frein selon l'une des revendications précédentes, **caractérisée en ce que** le dispositif de commande (12) est le dispositif de commande d'un système anti-blocage.

10. Installation de frein selon l'une des revendications précédentes, **caractérisée en ce qu'**avant l'entrée de commande (46) du dispositif de soupape (34) renforçant le débit d'air est raccordée une soupape (56) de protection contre les surcharges dont la première entrée (70) est raccordée à la soupape de commande (52) associée à ce dispositif de soupape (34) renforçant le débit d'air, la deuxième entrée (72) à un dispositif (16) d'actionnement des freins de service et dont la sortie (74) est raccordée pneumatiquement à l'entrée de commande (46) du dispositif de soupape (34) renforçant le débit d'air.

11. Installation de frein selon la revendication 10, **caractérisée en ce que** le dispositif de soupape (34) renforçant le débit d'air et la soupape (56) de protection contre les surcharges sont intégrés en une unité commune (82).
